# EUROPEAN PATENT APPLICATION

(11) **EP 2 813 470 A1**
(43) Date of publication of application: **17.12.2014**
(21) Application number: 13171967.6
(22) Date of filing: 14.06.2013
(51) Int. Cl.: C01B 31/18, B01J 29/08, B01J 29/40

(54) **Method for decomposition of formic acid using zeolite catalysts**

(71) Applicant: Bayer Technology Services GmbH, 51368 Leverkusen (DE)
(72) Inventor: Lolli, Giulio, Dr., 51069 Köln (DE); Karpenko, Alexander, Dr., 51371 Leverkusen (DE); Kockrick, Emanuel, Dr., 40595 Düsseldorf (DE); Wichmann, Daniel, Dr., 50170 Kerpen (DE); Grasser, Stefan, Dr., 51377 Leverkusen (DE); Mleczko, Leslaw, Prof.Dr., 41542 Dormagen (DE); Wolf, Aurel, Dr., 42489 Wülfrath (DE); Long, Zhao, Dr., Shanghai 201100 (CN)
(74) Representative: BIP Patents

(57) **Abstract**

The invention provides an highly effective and stable method to decompose formic acid and/or its derivatives into carbon monoxide in the presence of a heterogeneous catalyst being H-ZSM-5, Zeolite Y or a mixture of them having a silicon/aluminum ratio from 8 to 200.

## Description

The invention relates to a process for manufacturing of high-purity carbon monoxide, comprising the step of reacting formic acid or/and at least one formic acid derivative in the presence of a heterogeneous catalyst to form carbon monoxide.

Sustainable supply of energy and decrease in CO₂ emission are two of the challenges in the future development of human society. Therefore, the modem energy supply should be based on renewable resources. On the other hand, the consumption of new energy should not release more CO₂ to our environment, which has been suffering from "greenhouse effect" induced by CO₂ from fossil energy consumption. In this respect, wind and solar energies are promising.

However, the supplies of wind and solar energies are not stable because they depend on whether wind and sunshine are available or not. Hence, the storage of these energies is of particular importance. One of the methods to store these energies is to transfer them into chemical energy. An efficient route is producing H₂, a well-known clean energy resource, by water electrolysis using wind and solar energies. In fact, H₂ storage is also a challenging topic in these years since it is difficult to store and transport gaseous H₂ in a large amount, and many methods have been proposed to facilitate hydrogen storage. An interesting H₂ storage medium is formic acid which is liquid at room temperature and non-toxic. In this case, hydrogen is stored by CO₂ hydrogenation to formic acid. Based on the formation and dehydrogenation of formic acid over catalysts a clean H₂ energy supply is possible. In the past years, this energy supply circle has been proven to be feasible. Formic acid formation by CO₂ hydrogenation at the lower temperatures has been established and highly pure H2 from formic acid decomposition also has been achieved (C. Federsel, R. Jackstell, M. Beller. Angew. Chem. Int. Ed., 2010, 49, 6245-6257; F. Joó. ChemSusChem, 2008, 1, 05-808).

Factually, formic acid is more than just a H₂ storage medium. It is also a potential intermediate for CO₂ utilization since many derivatives can be obtained from formic acid via different reactions. CO₂ can be trapped from power plants via scrubbing. Monoethanolamine and some other amino alcohols can be used for this purpose (Bai H., Yeh, A.C. Ind. Eng. Chem. Res., 1997, 36, 2490-2493). Dehydration of formic acid can supply CO for syngas which is an important building block in modem chemical industry (M. Malinowski, K. Malinowska, L.W. Zatorski. Bull. Soc. Chim. Belg., 1983, 92, 225-227). By esterification, formic acid can be transferred into methyl formate, another famous C1 building block in chemical industry (J.S. Lee, J.C. Kim, Y.G. Kim. Appl. Catal., 1990, 57, 1-30). Production of formaldehyde from formic acid is also possible, and formaldehyde is widely used in the production of chemicals and polymers. Moreover, formic acid can be directly used as a monomeric precursor in polymer production (C.G. Gebelein. J. Poly. Sci.: Part A-1, 1972, 10, 1763-1771).

Using of syngas to produce transportation fuels and chemicals has attracted much attention in the recent years. If CO can be produced economically from formic acid, this process should be a promising route for CO₂ utilization. Highly pure CO production from formic acid, which is catalyzed by concentrated sulfuric acid, is a well-known method in laboratory practice. However, usage of H₂SO₄ is not environment-friendly, so this process is not suitable for industrial application, and it is necessary to develop a 'green catalyst' for the achievement of 'green dream' from CO₂ to CO. A heterogeneous catalyst is preferred in order to have more control over the process. In fact, some solid catalysts, for example, metal oxides, had been studied widely in formic acid decomposition before 1980s (P. Mars, J.J.F. Scholten, P. Zwietering. Advances in catalysis, 1963, 14, 35-113; J.M. Trillo, G. Munuera, J.M. Criado. Catal. Rev., 1972, 7, 51-86). The acidic sites on a metal oxide surface are considered as the active sites for dehydration to CO and H₂O, while the basic sites are functioning for formic acid dehydrogenation to H₂ and CO₂ (M. Ai. J. Catal., 1977, 50, 291-300). Because of the increasing interest in H₂ fuel cell in these years, formic acid dehydrogenation becomes a hot topic in catalytic science. Comparatively, much less attention has been paid to formic acid dehydration to CO. Only several publications are available in this field in past 30 years, and acidic metal oxides displayed attractive performance, especially in terms of CO selectivity, which can be high up to 99% (M. Malinowski, K. Malinowska, L.W. Zatorski. Bull. Soc. Chim. Belg., 1983, 92, 225-227).

Decomposition of formic acid to CO on solid catalyst is a process studied in the past. JP 1-07413 relates to a manufacturing method of high purity carbon monoxide. It is related with the manufacturing method of the high purity carbon monoxide which has in more detail not less than 99.99% of purity used by semiconductor manufacturing fields, such as an integrated circuit. Therefore, a Mordenite (MOR) based catalyst is used for the decomposition of formic acid at high temperatures of about 250 °C to obtain good activity. By lowering temperature, as expected, the conversion suffers due to the decrease in reaction rate. Moreover this catalyst suffers of deactivation. Water, as byproduct of reaction, tends to absorb and block the active sites, unless it is desorbed due to the high temperature.

JP 7-33421 also relates to a manufacturing method of high purity carbon monoxide. In contrast to JP 1-07413 the formic acid reacts to carbon monoxide under the existence of a zeolitic catalyst and by adding mineral acids, like hydrochloric or sulfuric acid. JP-7-33421 employs as feed a mixture of formic acid and hydrochloric acid (0,7%) to boost the conversion. This increases the conversion and prevents deactivation of the catalyst. Even in this case the temperature used is relatively high with up to 350 °C. Decomposition of Formic acid by concentrated acids is a well-known process since almost a century (J.S. Morgan, J. Chem. Soc. Trans., 1916109, 274 (1916); P.G. Bowers, G. Rawji, J. Phys. Chem., 1977, 81 (16), 1549-1551).

JP 6-305722 discloses a method for manufacturing of carbon monoxide using H-Mordenite as a catalyst by decomposing formic acid thermally, wherein the reaction temperature is usually 150-300 °C. When H-Mordenite is used as a catalyst by the method of this invention, catalytic activity can continue over a long time and the carbon monoxide of the high grade in which a hydrogen content is lower than formic acid can be comparatively obtained.

The decomposition of formic acid has been also studied by Malinowski et al. at 250-400 °C on some heterogeneous catalysts (M. Malinowski, K. Malinowska, L.W. Zatorski. Bull. Soc. Chim. Belg., 1983, 92, 225-227). Alumina, silica, natural (clinoptilolite) and synthetic zeolites were used as catalysts. As known in prior art formic acid decomposition can proceed in acidic conditions to H₂O and CO. For example, mixing formic acid and concentrated sulfuric acid is the standard way to obtain small amounts of CO in the chemical laboratories. The known prior art addresses the problem of decomposition of formic acid to carbon monoxide with a multitude of proposed industrial solutions. Decomposition over acidic catalysts would be the preferred solution, in terms of economic efficiency and purity due to no side products. Moreover the process involving an active heterogeneous catalyst can be scaled up industrially.

Starting from the prior art described above, it has therefore been the problem of the invention to provide an alternative process for manufacturing of high-purity carbon monoxide.

The invention has solved said problem by providing a process for manufacturing of high-purity carbon monoxide, comprising the step of reacting formic acid or/and at least one formic acid derivative in the presence of a heterogeneous catalyst to form carbon monoxide, **characterized in that** the heterogeneous catalyst is H-ZSM-5or Zeolite Y and the silicon/aluminum ratio of the heterogeneous catalyst is from 8 to 200.

The catalyst used in the process of the invention shows higher activity at lower temperatures and shows no deactivation. This improves the economic efficiency of the process, reduces the energy demand due to a low reaction temperature, the reactor size and increases the catalyst lifetime. Compared to catalysts treated with mineral acid aided catalysts, where acid should prevent deactivation and increase performance, the catalyst according to the present invention does not require any addition of other chemicals, reducing costs and complexity, improving the product purity (e.g. content of chlorine or sulfur) and shows a comparably high performance. Furthermore, utilization of such mineral acid free catalyst(s) prevents corrosion (e.g. corrosion of reactor wall and/or pipe), which improves the plant safety and the lifetime of plants.

The invention relates to an acidic zeolite catalyst that is able to decompose formic acid and/or formic acid derivatives with high conversions (>99.9%) and selectivity (>99.99%) at moderate temperatures (180-190°C) without suffering deactivation and without the addition of other acids (mineral acids like H₂SO₄ or HCl). Thus a process for the production of high purity CO from formic acid was envisioned.

The catalyst used in the process of the invention has a specific acidity and crystallite structure. The acid sites are required to perform the reaction, so more and stronger acid sites result in higher activity. At the same time the water present in the feed and as co-product of the reaction

HCOOH → CO + H₂O

interacts with them. If the site is too strong then water is absorbed and the site is blocked resulting in a progressive deactivation. The solution was found in a balanced catalyst with intermediate acidity which is enough to activate the reaction, but not enough to obtain a permanent absorption of water. The previous art circumvents this issue either by excessively increasing the temperature or by adding mineral acid to replenish the lost acid site. The invention has advantage above both.

Also the crystal structure of the catalyst is important. Mordenite (MOR structure) that is used in the prior art, is a very acidic catalyst but has alternated straight and cross channels resulting in a physically hindered water desorption. The catalyst used in the process of the invention is H-ZSM-5 and/or Zeolite Y, which have an mordenite framework inverted (MFI) or Faujasite (FAU) structure respectively and only straight channels resulting in a facile desorption of the co-product water.

The aforementioned problem was solved by providing a process for manufacturing of high-purity carbon monoxide, comprising the step of reacting formic acid or/and at least one formic acid derivative in the presence of a heterogeneous catalyst to form carbon monoxide, **characterized in that** the heterogeneous catalyst is H-ZSM-5 or Zeolite Y and the silicon/aluminum ratio of the heterogeneous catalyst is from 8 to 200.

In a further embodiment of the invention, the silicon/aluminium ratio of the heterogeneous catalyst is from 20 to 100. In a further embodiment, the silicon/aluminium ratio of the heterogeneous catalyst is from 27 to 90. In a further embodiment of the invention, the silicon/aluminium ratio of the heterogeneous catalyst is from 30 to 80, preferably from 40 to 70, more preferably from 50 to 60. In a particularly preferred embodiment, the silicon/aluminium ratio of the heterogeneous catalyst is 55. H-ZSM5 or Zeolite Y is used as catalyst in the process of the invention, as it offers particular advantages as far as the reaction is concerned, as well as with regard to process economics. Zeolite ZSM-5 and Zeolite Y are used in the petrochemical industry for large processes like the Fluid Catalytic Cracking. Due to the economy of scale it is the only zeolite with a modest production cost, representing an advantage for the process. Using a different zeolite is possible, but would have disadvantages, if not from the reaction side, at least from the process economics. The Si-Al ratio can be changed inside some limits given by the zeolite production process, and it is directly correlated to the acidity of the material. More acidity will lead to a better initial performance, but a faster deactivation due to the persistent absorption of the products. A weaker acidity will not have the catalytic advantage. A balanced acidity (between 27 and 90, preferably 55) will give the best performance.

In a preferred embodiment the step of reacting is carried out at temperatures from 180-200°C for formic acid and 200-280°C for formic acid derivatives. Formic acid derivatives, due to their acid-base nature, have a worse decomposition thermodynamic and a higher absorption affinity on the catalyst. A higher reaction temperature is expected in such a case. A reduction of the temperature is possible but will result in a slower reaction kinetic and in a faster catalyst deactivation by absorption. A higher temperature will speed up the reaction and prevent absorption, but will challenge the catalyst stability and increase the energetic costs of the process. The optimum is again the lowest temperature compatible with the catalyst and substrate. For Formic acid, the optimum for our process lies between 180-200°C and for derivatives between 200-280°C depending on substrate.

In another preferred embodiment the process pressure of the step of reacting is from 1 bar to 6 bar, preferably from 1 bar to 2 bar absolute pressure. The reaction converts one equivalent of formic acid or formic acid derivative vapor in 2 or 3 equivalents of products. According to the reaction equilibrium (Le Chatelier's principle) reaction that produces more equivalents are favored at lower pressures. The preferred reaction pressure is thus low. Due to engineering constrains and cost wise, a process between 1-6 bar (preferred between 1-2 bar) is preferred to favor the reaction and limit the reactor volume and construction costs.

In the context of the invention, the preferred liquid hour space velocity (LHSV) of the step of reacting is from 0,5 h⁻¹ to 2 h⁻¹, preferably 1 h⁻¹. The LHSV is related to the catalyst activity. We found experimentally that for the claimed catalyst/process a LHSV of 1 h⁻¹ allows to reach 100% conversion of Formic acid and ca. 50% conversion of formic acid derivatives. The LHSV could be decreased, to increase the conversion, for example in the case of derivatives, or can be increased to increase the reactor productivity. In this case however more catalyst or an higher temperature should be used to compensate for the effect.

In a particularly preferred further embodiment of the process the at least one formic acid derivative is selected from the group comprising formamides and ammonium formiates. The at least one formic acid derivative can also be dissolved in water. Formamides and ammonium formiates are the preferred products from the CO₂ hydrogenation process (see for example C. Federsel, R. Jackstell, M. Beller. Angew. Chem. Int. Ed., 2010, 49, 6245-6257; F. Joó. ChemSusChem, 2008, 1, 05-808). From this process these products either come dissolved or mixed with water. The process of the invention that is able to decompose the products directly from this water solution without a separation/purification process clearly has a competitive economic advantage.

A preferred further embodiment of the process is **characterized in that** the formamide is selected from the group comprising N,N-Dimethylformamide, N,N-Diethylformamide and N,N-Diisopropyl-formamide. Formamides are the preferred substrate because they are easier to decompose than the formiates. Smaller is formamide, and thereforethe decomposition is easier, simply for thermodynamic reasons. Thus N,N-Dimethylformamide is preferred over N,N-Diethylformamide which in turn is preferred over N,N-Diisopropyl-formamide. Larger Formamides are less preferred as they tend to be more difficult to decompose.

In an alternative embodiment of the process the ammonium formiate is selected from the group comprising Trimethylammonium formiate, Triethylammonium formiate and Triisopropylammonium formiate. Formiates are more difficult to decompose than the formamides, but easier to obtain in the process of hydrogenation (C. Federsel, R. Jackstell, M. Beller. Angew. Chem. Int. Ed., 2010, 49, 6245-6257; F. Joó. ChemSusChem, 2008, 1, 05-808). Smaller is the formiate, and thereforethe decomposition is easier, simply for thermodynamic reasons. Trimethylammonium formiate >> Triethylammonium formiate > Triisopropylammonium formiate. Larger formiates will be too difficult and expensive to decompose.

The invention, including preferred embodiments will be described in conjunction with the following drawings and examples, without being limited thereto. The embodiments may be combined, unless the contrary is clearly not out of context.
FIG. 1: Scheme of the reactor system used for the laboratory experiments. The system is built either in glass or stainless steel and placed directly inside an electric furnace. The online analytic attached is described in the experimental section.
FIG. 2: Conversion of formic acid vs. LHSV. The points represent experimental data and the line the kinetic model considering a first order kinetic. The good agreement demonstrates the experiments were performed in a kinetically controlled regime.
FIG. 3: Long time stability test. The catalyst and process according to invention is stable both in terms of conversion and selectivity for long time on stream. After 220h no appreciable degradation of the conversion or selectivity, which remains above 99,99%, is observed.
FIG. 4: Conversion of N,N-Dimethylformamide and N,N-Diethylformamide on different zeolithes with different Si/Al ratios. For the decomposition of derivatives, due to their more stable nature, higher temperature (280°C) and stronger zeolites (module 27) are preferable. The catalyst is again stable in these conditions.
FIG. 5: Conversion of Diethylammonium formiate and Triethylammonium formiate. Diethylammonium formiate reach similar conversion of N,N-Diethylformamide (corresponding formamide) while the tertiary ammonium salts have generally lower conversion.
FIG. 6: Conversion of Triisopropylammonium formiate. Conversion of ammonium formiate salts can also proceed in the same conditions, even if the conversion is in this case even lower, due to the higher stability of the derivative.

### Examples

### General experimental procedure description

Hereinafter, the invention is described in more detail and specifically with reference to the Examples, which however are not intended to limit the invention.

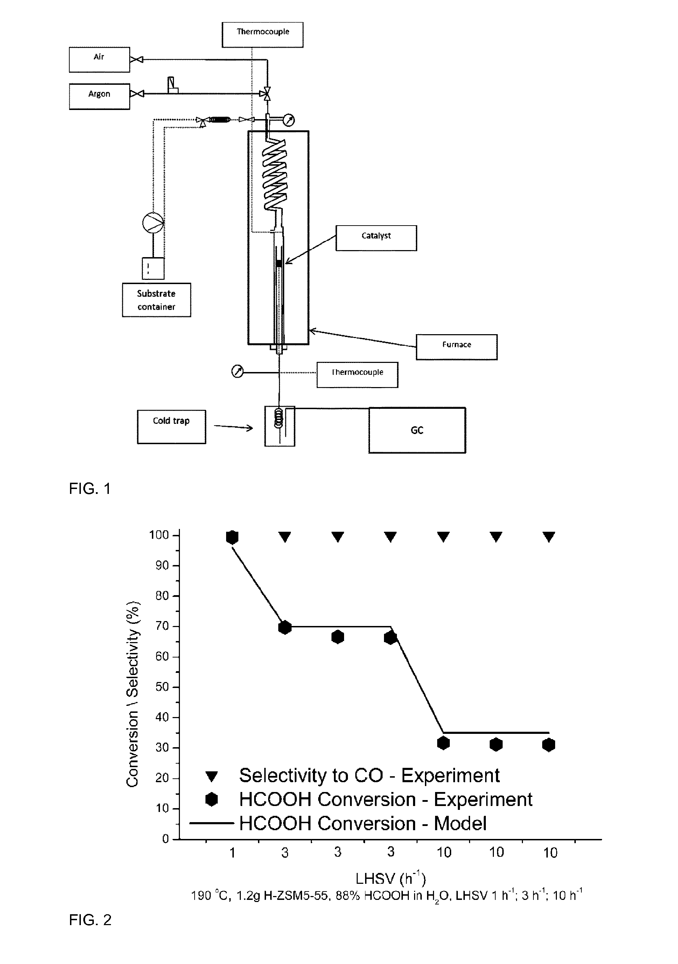

All experiments with formic acid derivatives were carried out in a plug-flow reactor. The reaction set-up consisted of a syringe pump connected to an evaporator, where substrate vapor was also mixed with a carrier gas as illustrated in FIG 1. The evaporator was directly connected to a tubular reactor. Liquid reaction products and unreacted substrate where collected in a cold trap. The reaction temperature was controlled by a thermocouple placed in the catalyst bed.

Before each experiment a catalyst sample was calcined in a muffle oven in air atmosphere. During the calcination the catalyst sample was heated at 100 °C. After 1 h temperature was raised to 200 °C and remained constant for 0.5 h, raised to 400 °C and remained constant for 0.5 h, and finally, raised to 600 °C and remained constant for 5 h. After cooling down, 0.6 g of the sample was placed in center of the reactor. Afterwards, the catalyst sample was held at 250 °C under constant Ar flow. After 1 h of heating the temperature was raised to a value used in an experiment. All experiments were carried out under atmospheric pressure.

In all the experiments Ar was used as a carrier gas (Ar flow = 0.275 L/h). All catalysts were tested at 1 h⁻¹ liquid hourly space velocity (LHSV). Dimethylformamide (DMF), diethylformamide (DEF), diethylammonium formate (DEAF), triethylammonium formate (TEAF), and diisopropylammonium formate (DiPAF) were used as a feedstock. Only DEAF and DiPAF mixtures contained water - 8.97% and 26.4%, respectively. Catalytic tests were conducted over H forms of various ZSM5 zeolites (Süd-Chemie-Clariant), differing from each other by Si/Al (module) values.

### General analytics methods

CO analysis was conducted by an online gas chromatography (GC) (Focus GC - Thermo Scientific) equipped with a TCD detector. Analysis of collected liquid products was carried out by a HPLC (Agilent Technologies 1200 Series) equipped with RID detector and INERSIL ODS-3 column. Water was used as a mobile phase in the above mentioned technique. Only analysis of liquid products coming from diethylformamide (DEF) decomposition was carried out by a GC (Hewlett Packard HP6890). Unreacted substrate and corresponding amine were separated in a CP-Sil-PONA-CB column and detected by a FID detector.

### Experimental details for formic acid decomposition reactions

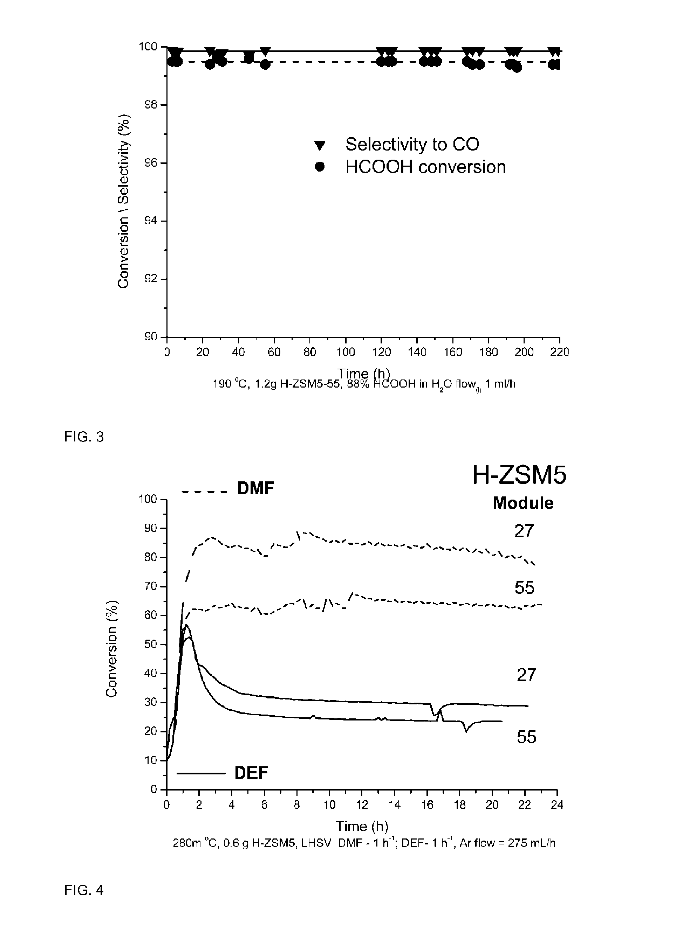

The optimized protocol for formic acid decomposition reactions was as following:
0.6 g of calcined zeolite (see "General experimental procedure description") was placed in center of the reactor. Catalyst was heated up to 150 °C and kept at the mentioned temperature for 1 h under constant Ar flow (1.5 L/h) under atmospheric pressure. Afterwards, the catalyst temperature was raised to 190 °C, which was a standard temperature used in the test reactions. In the same time the Ar flow was set to 0.275 L/h and kept constant throughout the whole test. After the temperature and the Ar flow stabilized, a continuous feed (LHSV = 1 h⁻¹) of the substrate was started. Atmospheric pressure inside the reactor remained constant throughout the test. Turning on the syringe pump was taken as time zero. The online GC was analyzing the gas stream coming from the reactor each 12 minutes. Analysis of the liquid products and unreacted substrate was performed in order to confirm the online GC results. See FIG. 2 and 3.

### Experimental details for formic acid derivatives decomposition reactions

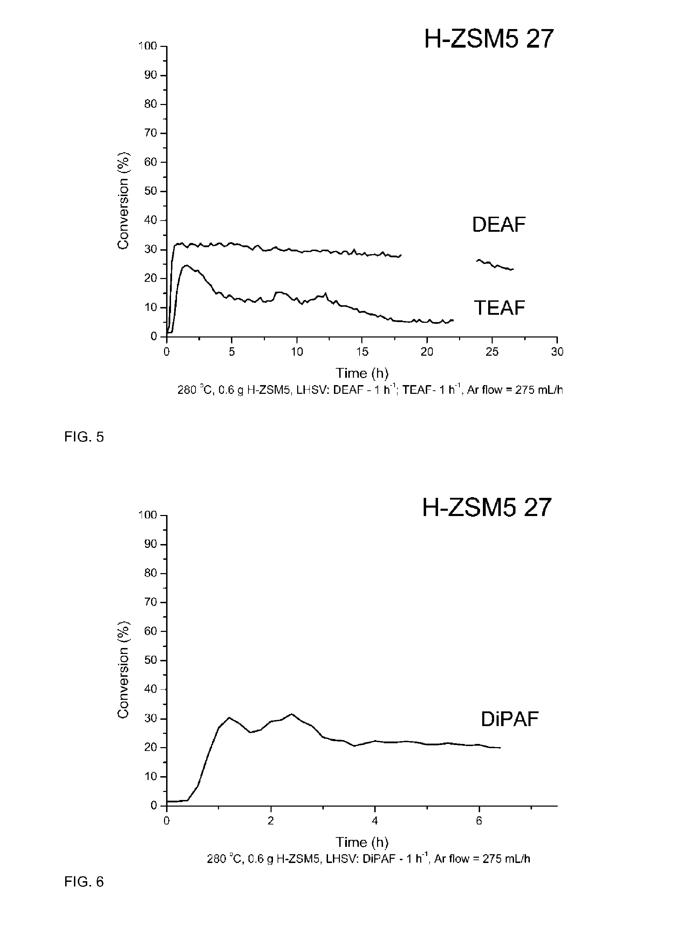

The optimized protocol for formic acid derivatives decomposition reactions was as following:
0.6 g of calcined zeolite (see "General experimental procedure description" paragraph) was placed in center of the reactor. Catalyst was heated up to 250 °C and kept at the mentioned temperature for 1 h under constant Ar flow (1,5 L/h) under atmospheric pressure. Afterwards, the catalyst temperature was raised to 280 °C, which was a standard temperature used in the test reactions. In the same time the Ar flow was set to 0.275 L/h and kept constant throughout the whole test. After the temperature and the Ar flow stabilized, a continuous feed (LHSV = 1 h⁻¹) of the substrate was started. Atmospheric pressure inside the reactor remained constant throughout the test. Turning on the syringe pump was taken as time zero. The online GC was analyzing the gas stream coming from the reactor each 12 minutes. Analysis of the liquid products and unreacted substrate was performed in order to confirm the online GC results. See FIG. 4, 5 and 6.

## Claims

1. A process for manufacturing of high-purity carbon monoxide, comprising the step of reacting formic acid or/and at least one formic acid derivative in the presence of a heterogeneous catalyst to form carbon monoxide,
**characterized in that**
the heterogeneous catalyst is H-ZSM-5, Zeolite Y or a mixture of them and
the silicon/aluminum ratio of the heterogeneous catalyst is from 8 to 200.

2. The process according to Claim 1 **characterized in that** the silicon/aluminum ratio of the heterogeneous catalyst is from 20 to 100, preferably from 27 to 90, more preferably from 30 to 80, more preferably from 40 to 70, even more preferably from 50 to 60, and most preferably 55.

3. The process according to Claim 1 or 2 **characterized in that** the step of reacting is carried out at temperatures from 180-200°C for formic acid and 200-280°C for formic acid derivatives.

4. The process according to Claim 1 to 3 **characterized in that** the process pressure of the step of reacting is from 1 bar to 6 bar, preferably from 1 bar to 2 bar absolute pressure.

5. The process according to Claim 1 to 4 **characterized in that** the liquid hour space velocity of the step of reacting is from 0,5 h⁻¹ and 2 h⁻¹, preferably 1 h⁻¹.

6. The process according to Claim 1 to 5 **characterized in that** the at least one formic acid derivative is selected from the group consisting of formamides and ammonium formiates.

7. The process according to Claim 6 **characterized in that** the at least one formic acid derivative is dissolved in water.

8. The process according to Claim 6 **characterized in that** the formamide is selected from the group consisting of N,N-Dimethylformamide, N,N-Diethylformamide and N,N-Diisopropyl-formamide.

9. The process according to Claim 6 **characterized in that** the ammonium formiate is selected from the group consisting of Trimethylammonium formiate, Triethylammonium formiate and Triisopropylammonium formiate.
